# EUROPÄISCHE PATENTANMELDUNG

(11) **EP 1 595 437 A2**
(43) Veröffentlichungstag der Anmeldung: **16.11.2005**
(21) Anmeldenummer: 05009886.2
(22) Anmeldetag: 06.05.2005
(51) Int. Cl.: A01F 15/07

(54) **Maschine zum Aufnehmen und Pressen von landwirtschaftlichem Erntegut**

(30) Priorität: 11.05.2004 DE 102004023705
(71) Anmelder: Maschinenfabrik Bernard Krone GmbH, 48480 Spelle (DE)
(72) Erfinder: Krone, Bernard Dr.-Ing. E.h., 48480 Spelle (DE); van Bassen, Alois, 49832 Freren (DE)

(57) **Zusammenfassung**

Maschine (1) zum Aufnehmen und Pressen von landwirtschaftlichem Erntegut wie beispielsweise Heu, Stroh, Gras oder dergleichen zu rollenförmigen Ballen mit einer klappbaren Wickelkammer und mit zumindest einer Querstäbe (17) aufweisenden, in eine Umlaufbewegung versetzbaren Ballenformeinrichtung (2,3), wobei die Querstäbe (17) der Ballenformeinrichtung (2,3) an ihren Endbereichen jeweils mit einem flexiblen gliederlosen Zugmittel (4) verbunden sind jeweils an ihrem endseitigen Verbindungsbereich mit dem Zugmittel (4) eine Faltung aufweisen.

## Beschreibung

Die Erfindung bezieht sich auf eine Maschine zum Aufnehmen und Pressen von landwirtschaftlichem Erntegut wie beispielsweise Heu, Stroh, Gras oder dergleichen zu rollenförmigen Ballen mit einer klappbaren Wickelkammer mit zumindest einer Querstäbe aufweisenden, in eine Umlaufbewegung versetzbaren Ballenformeinrichtung.

Eine derartige Maschine, die als variable Rundballenpresse ausgebildet ist, ist aus der DE 40 12 753 C2 bekannt. Bei dieser vorbekannten Maschine haben die Querstäbe des Ballenförderers an ihren Stimenden jeweils einen im wesentlichen plattenförmigen Querstabbefestigungsanschluß, der über Bolzen an zwei benachbarten Kettenglieder einer im Bereich von Gehäuseseitenwandteilen der Maschine angeordneten Wickelkette lösbar festgelegt ist. Das Querstabbefestigungselement ist als starres Plattenelement ausgebildet, das mit den Querstäben verschweißt ist. Mit der Wickelkette ist dieser Plattenkörper über Bolzen festzulegen. Mit einer so ausgebildeten Ballenformeinrichtung lassen sich zwar durchaus die notwendigen Ballenformkräfte auf den zu formenden Ballen übertragen, im Alltagsbetrieb jedoch verursachen die Plattenelemente und die Kettenelemente der Wickelkette nicht unerhebliche Betriebsgeräusche und unterliegen einem nicht unerheblichen Verschleiß, so daß der Wunsch besteht, hier Abhilfe zu schaffen und eine geräuschärmere Maschine bei gleichzeitig erhöhter Haltbarkeit der gattungsgemäßen Bauart zur Verfügung zu stellen.

Zur Lösung dieser Problemstellung zeichnet sich die Maschine der eingangs genannten Art dadurch aus, daß die Querstäbe der Ballenformeinrichtung an ihren Endbereichen jeweils mit einem flexiblen gliederlosen Zugmittel verbunden sind, wobei die Querstäbe jeweils an ihrem endseitigen Verbindungsbereich mit dem Zugmittel eine Faltung aufweisen.

Durch das Vorsehen eines flexiblen gliederlosen Zugmittels, beispielsweise eines aus einem Kunststoffinaterial oder eines aus Gummi mit einer Gewebeeinlage bestehenden Antriebsriemens, sind zunächst die Voraussetzungen geschaffen, in verschleißarmer Weise die Formeinrichtung anzutreiben, darüber hinaus jedoch auch sicherzustellen, daß mit der Antriebsbewegung der Formeinrichtung ein geräuscharmer Betrieb ermöglicht ist. Durch die in den Verbindungsbereichen gefalteten Querstäbe lassen sich hohe Kräfte aufnehmen, da durch die Faltung aus dem Querstab heraus selbst hohe Momentenbelastungen aufgenommen werden können. Zudem ermöglicht es die Faltung, den Verbindungsbereich auch von den geometrischen Abmessungen her so zu gestalten, wie es eine optimale Verbindung der Querstäbe mit dem jeweiligen Antriebsriemen erfordert und dabei beispielsweise auch auf z.B. vorgesehene Nuten und Stege an dem Zugmittel im Hinblick auf ein Teilungsmaß des Zugmittel zwecks Anbindung an Antriebszahnräder oder Antriebsrillen Rücksicht zu nehmen.

In besonders bevorzugter Weise ist ein Querstab derart gefaltet, daß in seinem Verbindungsbereich eine asymmetrische Faltung vorgesehen ist. Insbesondere soll dabei eine dreifache Faltung des Verbindungsbereiches vorgesehen sein, wobei sich der Begriff der Dreifachheit auf die Anzahl der Umlenkungen im Faltungsbereich bezieht. Insgesamt ist damit ein außerordentlich biegesteifer Querstab insbesondere in seinem Verbindungsbereich mit dem Zugmittel vorgesehen. Umlenkräder der Ballenformeinrichtung, die bei Maschinen der gattungsgemäßen Art vorzusehen sind, können relativ klein bauend ausgebildet sein, was sich günstig auf die Gestehungskosten und auf den zur Verfügung stehenden Einbauraum auswirkt. Aufgrund der asymmetrischen Faltung, die im übrigen auch relativ kostengünstig herzustellen ist, entspricht das Zentrum der Faltung nicht dem räumlichen Zentrum eines vorzugsweise rohrförmig ausgebildeten Querstabes. Die asymmetrische Faltung sorgt dafür, daß im den Anbindungsbereich des Querstabrohres am Zugmittel im Betrieb keine großen Drehmomente aufgenommen werden müssen, die dadurch verursacht sein können, daß die Querstäbe während eines Ballenformeinrichtungsumlaufes durch das zu formende Erntegut verdreht werden.

Die Höhe der Faltung ist möglichst klein zu halten und entspricht, wenn das Zugmittel entsprechende Stege aufweist, in etwa der Höhe der Stege im Angrenzungsbereich neben der Faltung bzw. ist etwas flacher ausgebildet.

Bevorzugterweise ist darüber hinaus auf den dem Faltungsbereich gegenüberliegenden Anbindungsbereich des Zugmittels ein Metallplattenelement vorgesehen. Dazu kann das Zugmittel auch im Bereich dieses Metallplattenelementes ebenfalls mit Nuten und Stegen ausgerüstet sein, wobei diese der Faltung abgewandten Nuten bzw. Stegbereiche so vorgesehen sind, daß diese auf die Breite der Faltung Rücksicht nehmen und in etwa gleich dieser Breite ausgebildet sind oder aber Stege bereichsweise dort vorgesehen sind, wo noch Seitenendbereiche der Faltung auf der gegenüberliegenden Seite des Zugmittels gelegen sind. Dadurch können entsprechende Gegenkräfte ausgeübt werden, was für sichere und gut beherrschbare Verbindungskräfte sorgt. Zudem wird der Druck, der von dem zu pressenden Ballenformmaterial auf die Querstege ausgeübt wird, bei Anlage des Zugmittels direkt über die Stege des Zugmittels abgegeben.

Weitere Vorteile und Ausgestaltungen der Erfindung ergeben sich aus weiteren Unteransprüchen, der nachfolgenden Beschreibung und der Zeichnung. In der Zeichnung zeigen:
- Fig. 1: eine schematische Seitenansicht eines Ausführungsbeispiels einer Ballenpresse mit variablem Ballenformraum,
- Fig. 2: eine Detaildraufsicht auf ein als Antriebsriemen ausgebildetes Zugmittel mit angebundenem Querstab,
- Fig. 3: eine Querschnittsdarstellung des Ausführungsbeispiels nach Fig. 2, und
- Fig. 4: eine perspektivische Darstellung des Ausführungsbeispiels nach den Fig. 2 und 3.

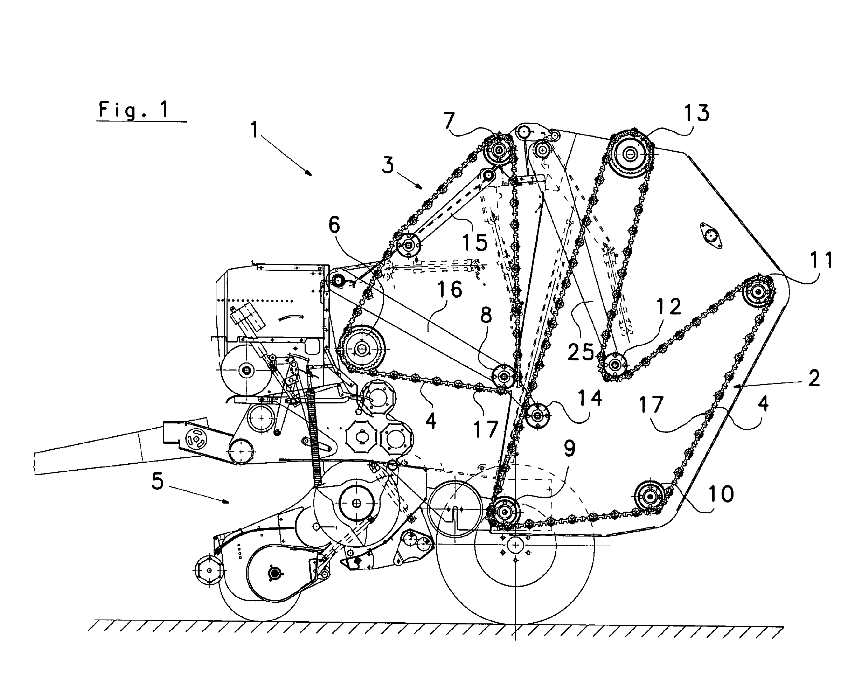

In Fig. 1 ist als Ausführungsbeispiel der Erfindung eine Maschine zum Aufnehmen und Pressen von landwirtschaftlichem Erntegut zu rollenförmigen Ballen gezeigt, die einen variablen Ballenformraum mit zwei einander zugeordnete Ballenformeinrichtungen 2 und 3 aufweist. Die Ausbildung der Ballenformeinrichtung 2, 3 mit in Endbereichen gefalteten Querstäben 17 und endseitig vorzusehenden Antriebsriemen 4 ist jedoch auch bei Maschinen mit völlig übereinstimmenden Vorteilen verwendbar, die nur eine Ballenformeinrichtung haben und/oder nach dem Festkammerprinzip arbeiten bzw. Ballenformphasen haben, in denen Festkammerprinzipien verwirklicht sind.

Die als Rundballenpresse 1 ausgebildete Maschine hat neben den beiden Ballenformeinrichtungen 2 und 3 eine Erntegutaufnahmevornchtung 5 sowie verschiedene Umlenkrollen 6, 7, 8, 9, 10, 11, 12, 13, 14, die teilweise ortsfest angeordnet sind und teilweise für eine Verlagerung der Ballenformeinrichtungen 2 und 3 bei anwachsendem Durchmesser des Ballens über Schwenkarme 15, 16, 25 nachgiebig gehaltert sind.

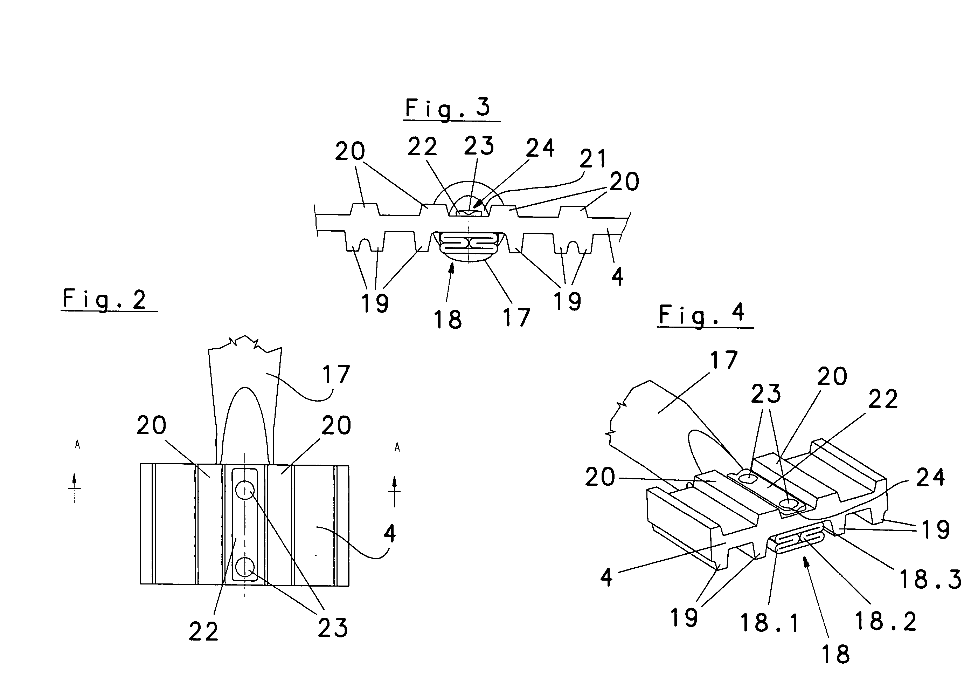

Die jeweiligen Ballenformeinrichtungen 2, 3 haben an ihren Endbereichen jeweils einen Antriebsriemen 4 aus Gummi mit einer Gewebeeinlage oder einem Kunststoffmaterial und weisen vorzugsweise metallische Querstäbe 17 auf. Diese haben in dem veranschaulichten Ausführungsbeispiel einen runden Querschnitt. In ihren Endbereichen haben sie jeweils eine Faltung 18, und zwar dergestalt, wie sehr deutlich aus den Fig. 3 und 4 hervorgeht, daß das geometrische Zentrum dieser Faltung 18 einen Abstand zur Mittellängsachse und mithin zum Zentrum des Rohres des Querstabs 17 aufweist, so daß es sich um eine asymmetrische Faltung handelt.

Dabei ist eine Dreifachfaltung vorgesehen, mit jeweils auf jeder Seite drei 180°-Faltungen in Gestaltung der Faltungen 18.1, 18.2 und 18.3. Daraus ergibt sich, daß es sich dabei um eine Faltung handelt, bei der der Seitenbereich des Rohres einmal eingeschlagen ist und die Faltungen - wie aus den Fig. 3 und 4 ersichtlich - zu einem flachen Paket zusammengedrückt wurden.

Die Faltung 18 bzw. das Paket der Faltung 18.1, 18.2 und 18.3 liegt direkt an einer Seite des Riemens 4 an, und zwar in einem Raum, der in den Ausführungsbeispielen nach den Fig. 3 und 4 durch nach unten weisende Querstege 19 begrenzt wird. Diese Querstege 19 haben dabei eine Hocherstreckung, die derart ist, daß sie in etwa der Höhe des Paketes der Faltungen entspricht bzw. ein wenig höher ausgebildet ist als die Faltungshöhe. Auf der diesen Stegen 19 gegenüberliegenden Fläche der Antriebsriemen 4 sind des weiteren Querstege 20 vorgesehen, wobei diese Querstege 20 in einem Bereich gegenüberliegend der Faltung 18 breiter ausgebildet sein können als die Stege 19, jedoch derart vorgesehen sind, daß sie eine Art Brücke zwischen den Stegen 19 und der Faltung 18 bilden, und mithin die Faltung 18 ein wenig und zusätzlich die Stege 19 überlappen. Dies ist sehr deutlich der Fig. 3 zu entnehmen. Zwischen diesen Stegen 20 ist in einer Nut 21 ein metallisches Plattenelement 22 vorgesehen als Widerlager, das an dem Riemen 4 anliegt. Der gefaltete Endbereich des Querstabs 17 ist über Niete 23, die den Antriebsriemen 4 durchsetzen, mit dem Metallplättchen 22 verbunden. In diesem Bereich, in dem die Niete 23 vorgesehen sind, ist aus Versteifungsgründen noch jeweils eine Sicke 24 vorgesehen.

## Patentansprüche

1. Maschine (1) zum Aufnehmen und Pressen von landwirtschaftlichem Erntegut wie beispielsweise Heu, Stroh, Gras oder dergleichen zu rollenförmigen Ballen mit einer klappbaren Wickelkammer und mit zumindest einer Querstäbe (17) aufweisenden, in eine Umlaufbewegung versetzbaren Ballenformeinrichtung (2,3), **dadurch gekennzeichnet, daß** die Querstäbe (17) der Ballenformeinrichtung (2,3) an ihren Endbereichen jeweils mit einem flexiblen gliederlosen Zugmittel (4) verbunden sind, wobei die Querstäbe (17) jeweils an ihrem endseitigen Verbindungsbereich mit dem Zugmittel (4) eine Faltung (18) aufweisen.

2. Maschine nach Anspruch 1, **dadurch gekennzeichnet, daß** die Querstäbe (17) an ihren Verbindungsbereichen mit dem Zugmittel (4) eine asymmetrische Faltung (18) aufweisen.

3. Maschine nach Anspruch 1 oder 2, **dadurch gekennzeichnet, daß** die Querstäbe (17) an ihren Verbindungsbereichen mit dem Zugmittel (4) dreifach gefaltet sind.

4. Maschine nach einem der Ansprüche 1 bis 3, **dadurch gekennzeichnet, daß** das Zugmittel (4) als Antriebsriemen ausgebildet ist.

5. Maschine nach einem der Ansprüche 1 bis 4, **dadurch gekennzeichnet, daß** ein Zugmittel (4) mit Abständen voneinander angeordnete Querstege (19) aufweist und die Faltung (18) durch Querstege (19) des Zugmittels (4) seitlich begrenzt ist.

6. Maschine nach Anspruch 5, **dadurch gekennzeichnet, daß** die Querstege (19) die Faltung (18) mit Abstand begrenzen.

7. Maschine nach einem der Ansprüche 1 bis 6, **dadurch gekennzeichnet, daß** die Höhe der Faltung (18) der Querstäbe (17) kleiner als die oder gleich der Höhe der benachbarten Querstege (19) des Zugmittels (4) ist.

8. Maschine nach einem der Ansprüche 1 bis 7, **dadurch gekennzeichnet, daß** die Querstäbe (17) mit dem Zugmittel (4) vernietet sind.

9. Maschine nach einem der Ansprüche 1 bis 8, **dadurch gekennzeichnet, daß** die Querstäbe (17) mit dem Zugmittel (4) unter Zuhilfenahme eines Plattenelementes (22) mit dem Zugmittel (4) verbunden sind, wobei das Plattenelement (22) auf der der Faltung (18) des Querstabes (17) abgewandten Seite des Zugmittels (4) vorgesehen ist.

10. Maschine nach Anspruch 9, **dadurch gekennzeichnet, daß** das Plattenelement (22) mit einer Sicke (24) versehen ist.

11. Maschine nach einem der Ansprüche 1 bis 10, **dadurch gekennzeichnet, daß** das Zugmittel (4) an seiner der Faltung (18) abgewandten Seite Nuten (21) und Stege (20) aufweist.

12. Maschine nach Anspruch 11, **dadurch gekennzeichnet, daß** die Breite der Faltung (18) im wesentlichen der Breite einer Nut (21) entspricht und/oder diese von ihrer Breitenerstreckung her überlappt.

13. Maschine nach einem der Ansprüche 9 bis 12, **dadurch gekennzeichnet, daß** das Plattenelement (22) in der Nut (21) gelegen ist.

14. Maschine nach einem der Ansprüche 1 bis 13, **dadurch gekennzeichnet, daß** das Zugmittel (4) aus einem Kunststoffmaterial oder aus Gummi mit einer Gewebeeinlage besteht.

15. Maschine nach einem der Ansprüche 1 bis 14, **dadurch gekennzeichnet, daß** das Zugmittel (4) über ein gezahntes oder gerilltes Umlenkeinrichtungselement (6, 7, 8, 9, 10, 11, 12, 13, 14) geführt ist, wobei das Zugmittel (4) und die Umlenkeinrichtung (6, 7, 8, 9, 10, 11, 12, 13, 14) ein unterschiedliches Teilungsmaß aufweisen.
